# EUROPEAN PATENT APPLICATION

(11) **EP 3 328 109 A1**
(43) Date of publication of application: **30.05.2018**
(21) Application number: 17203451.4
(22) Date of filing: 24.11.2017
(51) Int. Cl.: H04W 12/06, H04W 88/08

(54) **METHOD AND APPARATUS FOR ESTABLISHING NETWORK CONNECTION**

(30) Priority: 24.11.2016 CN 201611053012
(71) Applicant: Beijing Xiaomi Mobile Software Co., Ltd., Beijing 100085 (CN)
(72) Inventor: WANG, Wei, Beijing, Beijing 100085 (CN); YU, Mingyang, Beijing, Beijing 100085 (CN); MA, Baiming, Beijing, Beijing 100085 (CN)
(74) Representative: dompatent von Kreisler Selting Werner - Partnerschaft von Patent- und Rechtsanwälten mbB

(57) **Abstract**

A method and an apparatus are provided for establishing a network connection. According to an example method, in case that a predetermined condition is satisfied, an open authorization first AP established on a router may be searched for. In response to finding the first AP, the target terminal may be controlled to establish a connection with the first AP. Subsequently, authentication information used for establishing a connection with a second AP may be acquired via the first AP. In this way, the target terminal may be controlled to establish a connection with the second AP based on the authentication information. The second AP is an authenticated authorization AP established on the router, where a connection has been established between the second AP and the target terminal before.

## Description

### CROSS REFERENCE TO RELATED APPLICATIONS

This application claims the priority to the Chinese Patent Application No. 201611053012.6 entitled "METHOD AND APPARATUS FOR ESTABLISHING NETWORK CONNECTION" filed on November 24, 2016, the entire content of which is incorporated herein by reference for all purposes.

### TECHNICAL FIELD

The present disclosure relates to establishing a network connection.

### BACKGROUND

A router may establish at least one access point (AP), and a smart terminal device may access a network via an AP. Any AP may be configured as an open authorization AP, or an authenticated authorization AP. An open authorization AP may establish a connection with any smart terminal device. For an authenticated authorization AP, a smart terminal device requesting a connection with the authenticated authorization AP may first be subjected to an authority authentication performed by a router, and only after passing the authentication may the smart terminal device be allowed to establish a connection with the authenticated authorization AP.

The router generally may perform the authority authentication on the smart terminal device requesting a connection with the authenticated authorization AP via a preset authentication password. Furthermore, after establishing a connection with the authenticated authorization AP, the smart terminal device may record the authentication password, such that it may be unnecessary for a user of the smart terminal device to reenter the password when the smart terminal device is to connect with this authenticated authorization AP again. However, the user may change the password of the authenticated authorization AP. In this case, the smart terminal device which has established a connection with the authenticated authorization AP before may not pass the authority authentication using the originally recorded password, and thus the user may need to reenter the new password to enable the smart terminal device to be authorized.

### SUMMARY

To solve the above technical problems, the present disclosure provides a method and an apparatus for establishing a network connection.

According to a first aspect of the present disclosure, a method for establishing a network connection is provided. The method may include: establishing a first access point (AP) and a second AP on a router, wherein the first AP is an open authorization AP and the second AP is an authenticated authorization AP; searching for the first AP in case that a predetermined condition is satisfied; in response to finding the first AP, controlling a target terminal device to establish a connection with the first AP; acquiring authentication information used for establishing a connection with the second AP via the first AP when determining that a connection was established between the second AP and the target terminal previously; and controlling the target terminal device to establish a connection with the second AP based on the authentication information.

According to a second aspect of the present disclosure, an apparatus for establishing a network connection is provided. The apparatus may include: a processor, and a memory configured to store instructions executable by the processor. The processor is configured to: search for a first AP in case that a predetermined condition is satisfied, wherein the first AP is an open authorization AP established on a router; in response to finding the first AP, control a target terminal device to establish a connection with the first AP; acquire authentication information used for establishing a connection with a second AP via the first AP when determining that a connection was established between the second AP and the target terminal previously, wherein the second AP is an authenticated authorization AP established on the router; and control the target terminal device to establish a connection with the second AP based on the authentication information.

According to a third aspect of the present disclosure, a non-transitory storage medium may be provided, which may store executable instructions executed by one or more processors. The executable instructions may be executed by the processor and may cause the processor to: search for a first AP in case that a predetermined condition is satisfied, wherein the first AP is an open authorization AP established on a router; in response to finding the first AP, control a target terminal device to establish a connection with the first AP; acquire authentication information used for establishing a connection with a second AP via the first AP when determining that a connection was established between the second AP and the target terminal previously, wherein the second AP is an authenticated authorization AP established on the router; and control the target terminal device to establish a connection with the second AP based on the authentication information.

It should be understood that the above general description and the detailed description below are merely exemplary and explanatory, and do not limit the present disclosure.

### BRIEF DESCRIPTION OF DRAWINGS

The accompanying drawings herein are incorporated in and constitute a part of this specification, illustrate examples conforming to the present disclosure and together with the description serve to explain the principles of the present disclosure.
FIG. 1 illustrates a schematic scene diagram for establishing a network connection according to an exemplary example of the present disclosure.
FIG. 2 illustrates an interaction flow diagram for establishing a network connection according to an exemplary example of the present disclosure.
FIG. 3 illustrates a flow diagram of a method for establishing a network connection according to an exemplary example of the present disclosure.
FIG. 4 illustrates a flow diagram of a method for establishing a network connection according to another exemplary example of the present disclosure.
FIG. 5 illustrates a block diagram of an apparatus for establishing a network connection according to an exemplary example of the present disclosure.
FIG. 6 illustrates a block diagram of a searching module in FIG. 5 according to an exemplary example of the present disclosure.
FIG. 7 illustrates a block diagram of a first acquiring module in FIG. 5 according to an exemplary example of the present disclosure.
FIG. 8 illustrates a block diagram of a determining submodule in FIG. 7 according to an exemplary example of the present disclosure.
FIG. 9 is a block diagram of an apparatus for establishing a network connection according to another exemplary example of the present disclosure.
FIG. 10 illustrates a schematic structural diagram of an apparatus for establishing a network connection according to an exemplary example of the present disclosure.

### DETAILED DESCRIPTION

Descriptions will now be made in detail to exemplary examples, examples of which are illustrated in the accompanying drawings. When accompanying figures are mentioned in the following descriptions, the same numbers in different drawings may represent the same or similar elements, unless otherwise represented. The implementations set forth in the following exemplary examples do not represent all implementations consistent with the present disclosure. Instead, they are merely examples of apparatuses and methods consistent with aspects related to the present disclosure as recited in the appended claims.

Terms used in the present disclosure are only for the purpose of description of specific examples, and are not intended to limit the present disclosure. As used in the present disclosure and appended claims, the singular forms "a/an", "said" and "the" intend to also include the plural form, unless the content clearly dictates otherwise. It should also be understood that the term "and/or" used herein means to include arbitrary and all possible combinations of one or more items listed in association.

It should be understood that terms such as "first", "second", "third" and the like may be used herein for description of information. However, the information shall not be restricted to these terms. These terms are only intended to distinguish among information of the same type. For example, under the circumstance of not departing from the scope of the present disclosure, a first information can also be referred to as a second information, similarly, a second information can also be referred to as a first information. Depending on the context, term "if' used herein can be interpreted as "when", "while" or "in response to determining".

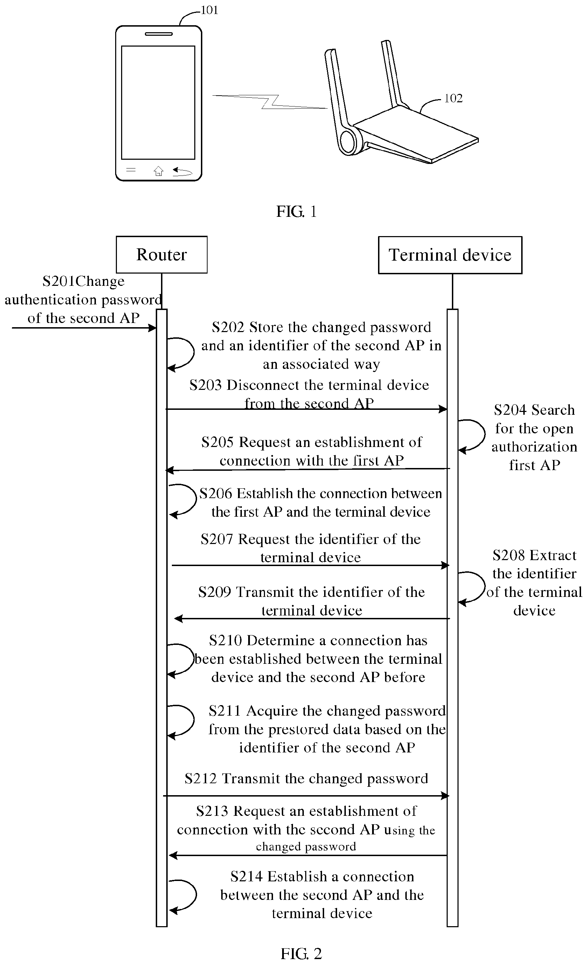

As shown in FIG. 1, a schematic scene diagram for establishing a network connection according to an exemplary example of the present disclosure is illustrated. The scene illustrated in FIG. 1 may include a terminal device 101 and a router 102. The router 102 may establish at least two APs on the router 102, including at least one first AP and at least one second AP. The first AP requires an open system authorization and the second AP requires authenticated authorization. Under the open authorization, the first AP may establish a connection with any terminal device, for example, the terminal device 101. A terminal device requesting a connection with the second AP may be subjected to an authority authentication performed by the router first and may connect to the second AP only if the terminal device passes the authority authentication. Therefore, when the terminal device 101 requests a connection with the second AP, the router 102 may need to first perform an authority authentication on the terminal device 101. Only after passing the authority authentication may the terminal device 101 establish the connection with the second AP.

In this example, after a connection has been established between the terminal device 101 and the second AP on the router 102 in the first time, the terminal device 101 may still establish a connection with the authenticated authorization second AP afterwards even if the password of the authenticated authorization second AP is changed. Therefore, it may be unnecessary for the user to reenter the new password. Thus, time for the terminal device to get connected to a network may be saved, and use efficiency of the AP may be improved.

As shown in FIG. 2, an interaction flow diagram for establishing a network connection is illustrated according to an exemplary example of the present disclosure.

First, in block S201, the router changes the authentication password of the second AP. In block S202, the router may store the modified password and an identifier of the second AP in an associated way. In block S203, the router disconnects the second AP from the terminal device. Because of being disconnected, the terminal device may execute block S204 to search for the open authorization first AP. When the first AP is detected, the terminal device may further execute block S205 to request the router to establish a connection between the terminal device and the first AP. After receiving the above request, the router may execute block S206 to establish the connection between the first AP and the terminal device.

Afterward, the router may execute block S207 to request an identifier of the terminal device from the terminal device. After receiving the request, the terminal device may execute block S208 and block S209 to extract the identifier of the terminal device and transmit the identifier of the terminal device to the router. After receiving the identifier transmitted by the terminal device, the router may execute block S210 to determine, based on the identifier of the terminal device, that a connection was established between the terminal device and the second AP previously. Furthermore, the router may further execute block S211 to acquire the modified password from the prestored data based on the identifier of the second AP.

Finally, the router may execute block S212 to transmit the modified password to the terminal device. Correspondingly, the terminal device may execute block S213 to request the router to establish a connection between the second AP and the terminal device using the modified password. After receiving the request, the router may perform an authority authentication on the terminal device based on the modified password. After the terminal device passes the authentication, the router may execute block S214 and establish the connection between the second AP and the terminal device.

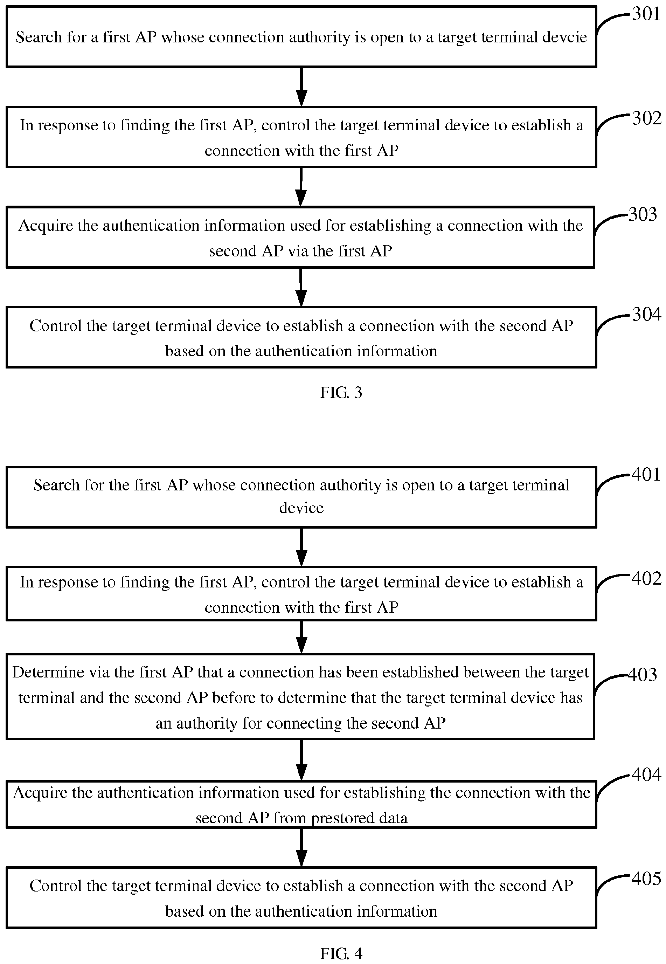

FIG. 3 illustrates an example flow diagram of a method for establishing a network connection according to an exemplary example of the present disclosure. The method may be applied to a router or a terminal device. In this example, for ease of understanding, reference is made by taking the terminal device that may access a network as an example. Those skilled in the art may appreciate that the terminal device may include, but is not limited to, a mobile terminal device such as a smart mobile phone, a smart wearable device, a tablet computer, a personal digital assistant, a smart home device, a portable laptop computer, a desktop computer, etc. The method may include the following blocks.

In block 301, a first AP whose connection authority is open to a target terminal may be searched for.

For example, at least one first AP and at least one second AP may be established on the router initially. In other words, the first AP and the second AP may be different APs established on the same router. The first AP may be an open authorization AP, whose connection authority is open to any terminal device, and thus a connection may be established between the first AP and any terminal device. The first AP may be disconnected from the network, and a terminal device connected with the first AP may be unable to access the network via the first AP. The second AP may be an authenticated authorization AP. The router may perform an authority authentication on a terminal device requesting to connect with the second AP, and may only establish a connection between the authenticated authorization second AP and the terminal device when the terminal device passes the authority authentication. The second AP may be connected with a network (a public network or a private network), and the terminal device connected with the second AP may access the network via the second AP.

In this example, a connection has been established between the second AP and the target terminal before. Therefore, it may be considered that the target terminal has the authority for establishing a connection with the second AP. Specifically, when a predetermined condition is satisfied, the first AP whose connection authority is open to the target terminal may be searched for. The predetermined condition may include either one of: the authentication information for establishing a connection with the second AP being modified; or the target terminal being unsuccessful in establishing a connection with the second AP.

In one implementation of this example, a connection state between the target terminal and the second AP may be first acquired when the authentication information for establishing the connection with the second AP (for example, a password used for connecting with the second AP) is modified. When the connection state indicates that a connection has been established between the target terminal and the second AP, the target terminal may be disconnected from the second AP, and the first AP whose connection authority is open to the target terminal may be searched for.

In another implementation of this example, the target terminal may transmit, to the router, a request for a connection with the second AP. The first AP whose connection authority is open to the target terminal may be searched for when the target terminal failed to establish a connection with the second AP.

In block 302, in response to finding the first AP, the target terminal may be controlled to establish a connection with the first AP.

In block 303, authentication information used for establishing a connection with the second AP may be acquired via the first AP.

In this example, the authentication information used for establishing a connection with the second AP may be a password used for connecting the second AP. When the password used for connecting the second AP is modified, the target terminal may be disconnected from the second AP if a connection has been established between the target terminal and the second AP. At this moment, the password used for connecting with the second AP may be acquired via the first AP to establish a connection between the target terminal and the second AP. If a connection between the target terminal and the second AP has not been established yet, the password used for connecting the second AP may be acquired via the first AP when the target terminal requests a connection with the second AP so as to establish a connection between the target terminal and the second AP.

Here, the router first determines whether a connection has been established between the target terminal and the second AP before. When the first AP determines that a connection has been established between the target terminal and the second AP before, the router determines that the target terminal has an authority for connecting with the second AP. Next, the authentication information used for establishing a connection with the second AP may be acquired from the prestored data and provided to the target terminal.

In block 304, the target terminal may be controlled to establish a connection with the second AP based on the authentication information.

In this example, after the authentication information used for establishing a connection with the second AP is acquired, the target terminal may be controlled to establish a connection with the second AP based on the authentication information. Specifically, the above authentication information may be transmitted to the target terminal, so that the target terminal may incorporate the authentication information into a request for a connection with the second AP transmitted to the router so as to pass the authenticated authorization of the router and connect with the second AP. According to the method for establishing a network connection provided by the above example of the present disclosure, the first AP whose connection authority is open to the target terminal may be searched for, in response to finding the first AP, the target terminal may be controlled to establish a connection with the first AP, authentication information used for establishing a connection with the second AP may be acquired via the first AP, and the target terminal may be controlled to connect with the second AP based on the authentication information. In this way, after the authentication information used for establishing a connection with the second AP is modified, it may not be necessary for a user of the terminal device to reenter new authentication information manually. Thus, the connection between the terminal device and the second AP may be established to access a network without manually inputting the modified password. Thus, time for the terminal device to get connected with the network may be saved, and use efficiency of the AP may be improved.

FIG. 4 illustrates a flow diagram of a method for establishing a network connection according to another exemplary example of the present disclosure. In this example, procedures of acquiring the authentication information used for establishing a connection with the second AP via the first AP may be further described. The method may be applied to a router or a terminal device and may include the following blocks.

In block 401, the first AP whose connection authority is open to the target terminal may be searched for.

In block 402, in response to finding the first AP, the target terminal may be controlled to establish a connection with the first AP.

In block 403, it may be determined that a connection has been established between the target terminal and the second AP before based on the first AP to determine that the target terminal has an authority for connecting with the second AP.

In block 404, authentication information used for establishing a connection with the second AP may be acquired from prestored data.

In this example, after the authentication information used for establishing a connection with the second AP is modified, the router establishing the second AP may store the modified authentication information into a storage medium corresponding to the router. After a connection is established between a terminal device and the second AP established on the router, it may be regarded that the terminal device has the corresponding authority for connecting with the second AP. An identifier of the second AP may be acquired and determined as a first identifier, and an identifier of the terminal having the authority for connecting with the second AP may be acquired and determined as a second identifier. Then, the first identifier and the second identifier may be stored in a correspondence database in an associated way. Therefore, a terminal device which has established a connection with the second AP before may be searched for in the correspondence database. The identifier of the AP may be a service set identifier (SSID) of the AP. It may be understood that the identifier of the AP also may be other identifiers, which is not limited in the present disclosure. The identifier of the terminal may be an MAC address of the terminal or may be a device serial number of the terminal. It may be understood that the identifier of the terminal also may be other identifiers, which is not limited in the present disclosure.

In this example, it may be determined that a connection between the target terminal and the second AP has been established before in the following way. First, a prestored correspondence database may be acquired, where the correspondence database may be configured to record a correspondence between any second AP established on the router and a terminal having the authority for connecting with the second AP. Next, terminal devices associated with the second AP may be searched for from the correspondence database. It may be determined that a connection has been established between the target terminal and the second AP before if the terminal devices associated with the second AP includes the target terminal.

In this example, the authentication information used for establishing a connection with the second AP may be acquired from the prestored data when it is determined that a connection has been established between the target terminal and the second AP before.

In block 405, the target terminal may be controlled to establish a connection with the second AP based on the authentication information.

It is to be noted that blocks in the example of FIG. 4 which are the same as those in the example of FIG. 3 are not repeated any more, and the example in FIG. 3 may serve as a reference.

According to the method for establishing a network connection provided by the example of the present disclosure, the first AP whose connection authority is open to the target terminal may be searched for. In response to finding the first AP, the target terminal may be controlled to establish a connection with the first AP. It may be determined that a connection has been established between the target terminal and the second AP before via the first AP. The authentication information used for establishing a connection with the second AP may be acquired from the prestored data, and the target terminal may be controlled to establish a connection with the second AP based on the authentication information. In this way, after the authentication information used for establishing a connection with the second AP is modified, it may be unnecessary for a user of the target terminal device to reenter new authentication information to establish a connection between the terminal device and the second AP. Thus, time for the terminal device to get connected with the network may be saved, and the use efficiency of the AP may be improved.

It may be noticed that although operations of the method according to the present disclosure are described in a particular order in the accompanying drawings, this does not require or imply to execute these operations necessarily according to the particular order, or this does not mean that the expected result cannot be implemented unless all the shown operations are executed. Instead, the blocks depicted in the flowcharts may be changed in execution order. Additionally or alternatively, some blocks may be omitted, a plurality of blocks may be combined into one block for execution, and/or one block may be decomposed into a plurality of blocks for execution.

Corresponding to the examples of the foregoing method for establishing a network connection, the present disclosure may further provide examples of an apparatus for establishing a network connection.

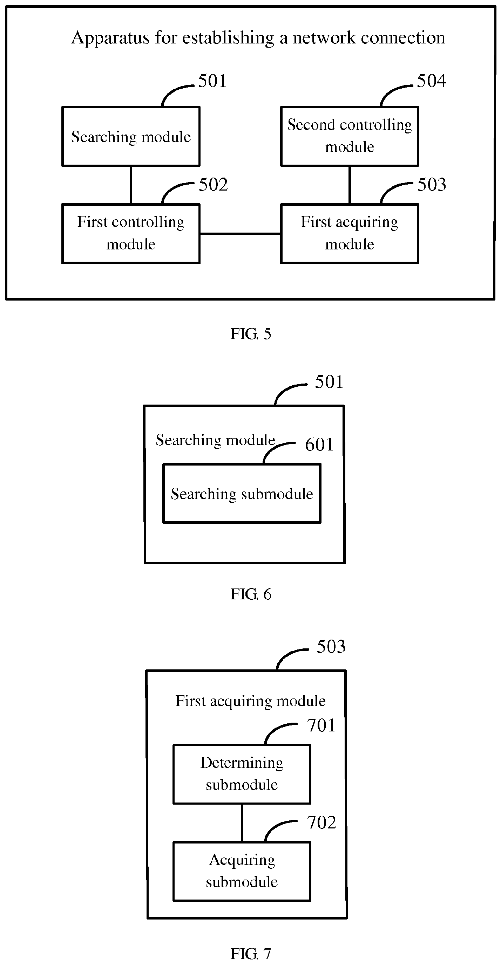

FIG. 5 illustrates a block diagram of an apparatus for establishing a network connection according to an exemplary example of the present disclosure. The apparatus includes: a searching module 501, a first controlling module 502, a first acquiring module 503, and a second controlling module 504.

The searching module 501 may be configured to search for a first AP whose connection authority is open to a target terminal.

The first controlling module 502 may be configured to control, in response to finding the first AP, a target terminal to establish a connection with the first AP.

The first acquiring module 503 may be configured to acquire via the first AP authentication information used for establishing a connection with a second AP.

The second controlling module 504 may be configured to control the target terminal to establish a connection with the second AP based on the authentication information.

The first AP and the second AP may be different APs established on the same router, where the second AP is an authenticated authorization AP, and the first AP is an open authorization AP. A connection has been established between the second AP and the target terminal before.

According to the apparatus for establishing a network connection provided by the above example of the present disclosure, the first AP whose connection authority is open to the target terminal may be searched for, and in response to finding the first AP, the target terminal may be controlled to establish a connection with the first AP. Authentication information used for establishing a connection with the second AP may be acquired via the first AP, and the target terminal may be controlled to establish a connection with the second AP based on the authentication information. In this way, after the authentication information used for establishing a connection with the second AP is modified, it is unnecessary for a user of the target terminal device to reenter new authentication information to establish a connection between the terminal device and the second AP. Thus, time for the terminal device to get connected to the network may be saved, and use efficiency of the AP may be improved.

FIG. 6 illustrates a block diagram of the searching module 501 in FIG. 5 according to an exemplary example of the present disclosure. On the basis of the example as shown in the FIG. 5, the searching module 501 may include a searching submodule 601. The searching submodule 601 may be configured to search for the first AP when a predetermined condition is satisfied.

The predetermined condition may include either one of: the authentication information for establishing a connection with the second AP being modified; or the target terminal being unsuccessful in establishing a connection with the second AP.

In one alternative example, the searching submodule 601 may be configured to acquire a connection state between the target terminal and the second AP when the authentication information for establishing a connection with the second AP is modified. When the connection state indicates that a connection has been established between the target terminal and the second AP, the target terminal may be disconnected from the second AP, and the first AP may be searched for.

In another alternative example, the searching submodule 601 may be configured to search, when the target terminal fails to establish a connection with the second AP, for the first AP whose connection authority is open to the target terminal.

FIG. 7 illustrates a block diagram of the first acquiring module 503 in FIG. 5 according to an exemplary example of the present disclosure. On the basis of the example as shown in the FIG. 5, the first acquiring module 503 may include a determining submodule 701 and an acquiring submodule 702.

The determining submodule 701 may be configured to determine that a connection has been established between the target terminal and the second AP to determine that the target terminal has an authority for connecting with the second AP.

The acquiring submodule 702 may be configured to acquire, from prestored data, the authentication information used for establishing a connection with the second AP.

The apparatus for establishing a network connection provided by the above example of the present disclosure may determine, via the first AP, that a connection has been established between the target terminal and the second AP before. The authentication information used for establishing a connection with the second AP may be acquired from prestored data. In this way, acquiring via the first AP the authentication information used for establishing a connection with the second AP may be implemented, which is conducive to saving time for the terminal device to get connected to a network and improving use efficiency of an AP.

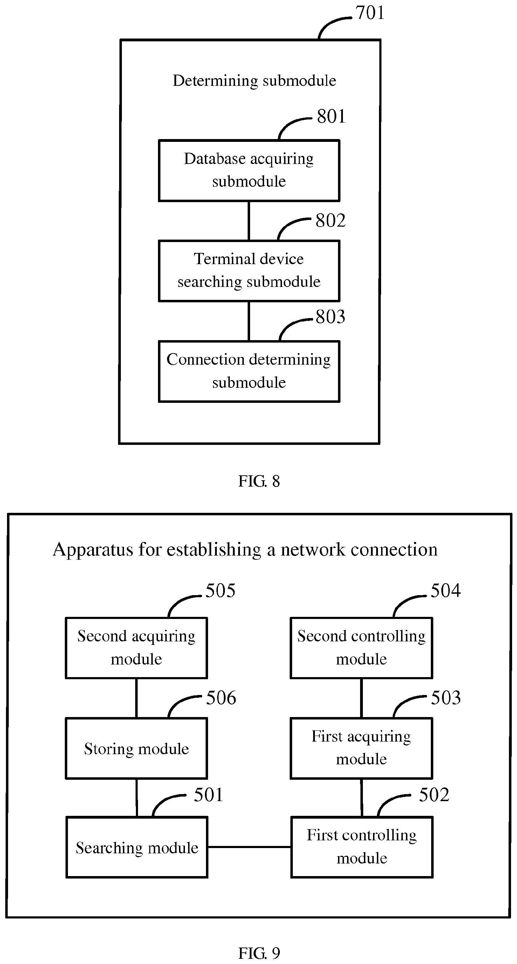

FIG. 8 illustrates a block diagram of the determining submodule 701 in FIG. 7 according to an exemplary example of the present disclosure. On the basis of the example as shown in the FIG. 7, the determining submodule 701 may include a database acquiring submodule 801, a terminal searching submodule 802, and a connection determining submodule 803.

The database acquiring submodule 801 may be configured to acquire a prestored correspondence database, where the correspondence database may be configured to record a correspondence between any second AP established on the router and a terminal device having the authority for connecting with the second AP.

The terminal searching submodule 802 may be configured to search for a terminal associated with the second AP in the correspondence database.

The connection determining submodule 803 may be configured to determine that a connection has been established between the target terminal and the second AP before when terminal devices associated with the second AP include the target terminal device.

The apparatus for establishing a network connection provided by the above example of the present disclosure may acquire the prestored correspondence database and search for a terminal device associated with the second AP in the correspondence database. It may be determined that a connection has been established between the target terminal and the second AP before when the terminal devices associated with the second AP include the target terminal device. In this way, the objective of determining that a connection has been established between the target terminal and the second AP before may be implemented. This is conducive to saving time for the terminal device to get connected to a network and improving use efficiency of the AP.

FIG. 9 illustrates a block diagram of an apparatus for establishing a network connection according to another exemplary example of the present disclosure. On the basis of the example as shown in the FIG. 5, the apparatus may further include a second acquiring module 505 and a storing module 506.

The second acquiring module 505 may be configured to respectively acquire a first identifier of the second AP and a second identifier of the terminal having the authority for connecting with the second AP.

The storing module 506 may be configured to store the first identifier and the second identifier in the correspondence database in an associated way.

The apparatus for establishing a network connection provided by the above example of the present disclosure may respectively acquire the first identifier of the second AP and the second identifier of the terminal having the authority for connecting with the second AP. The first identifier and the second identifier may be stored in the correspondence database in an associated way. In this way, the correspondence database may be established. This is conducive to saving time for the terminal device to get connected with a network and improving use efficiency of an AP.

It should be appreciated that the above apparatus may be preset in the router or the terminal device, or may be loaded into the router or the terminal device by way of loading and so on. Corresponding modules in the above apparatus may mutually cooperate with units in the router or terminal device to implement the solution for establishing a network connection.

Apparatus examples are basically corresponding to the method examples, and thus the method examples may serve as reference. Apparatus examples set forth above are merely exemplary, wherein units described as detached parts may be or not be detachable physically; parts displayed as units may be or not be physical units, i.e., either located at the same place, or distributed on a plurality of network units. Modules may be selected in part or in whole according to the actual needs to implement the objective of the solutions of the present disclosure. It is conceivable and executable for those of ordinary skill in the art without creative labour.

Correspondingly, the present disclosure may further provide an apparatus for establishing a network connection. The apparatus for establishing a network connection may include a processor and a memory configured to store instructions executable by the processor, where the processor may be configured to:
search for a first AP whose connection authority is open to a target terminal;
in response to finding the first AP, control the target terminal to establish a connection with the first AP;
acquire via the first AP authentication information used for establishing a connection with the second AP; and
control the target terminal to establish a connection with the second AP based on the authentication information.

The first AP and the second AP may be different APs established on the same router, where the second AP is an authenticated authorization AP, and the first AP is an open authorization AP. A connection has been established between the second AP and the target terminal before.

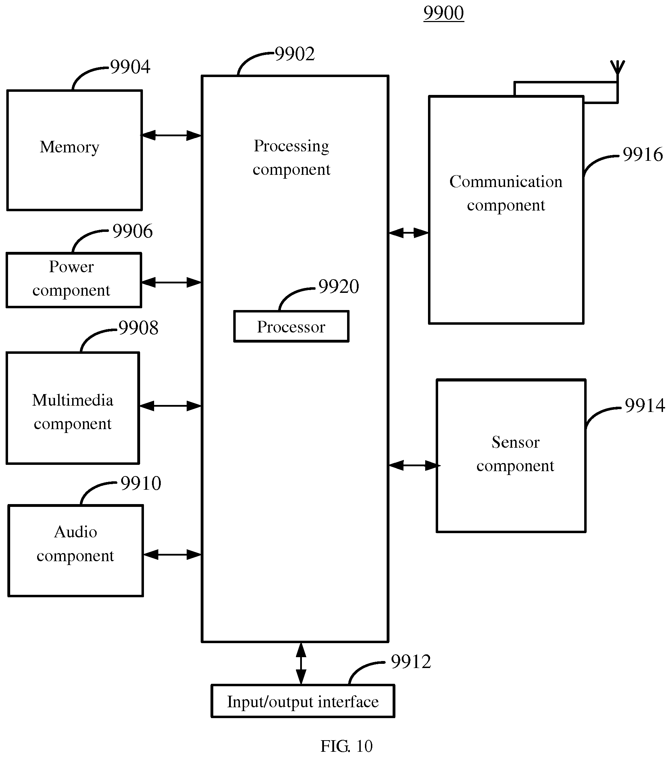

FIG. 10 illustrates a schematic structural diagram of an apparatus 9900 for establishing a network connection according to an exemplary example. For example, the apparatus 9900 may be a mobile phone, a computer, a digital broadcast terminal, a message transceiver device, a game console, a tablet device, a piece of medical equipment, a fitness facility, a personal digital assistant, and the like.

Referring to FIG. 10, the apparatus 9900 may include one or more of the following components: a processing component 9902, a memory 9904, a power component 9906, a multimedia component 9908, an audio component 9910, an input/output (I/O) interface 9912, a sensor component 9914, and a communication component 9916.

The processing component 9902 typically controls overall operations of the apparatus 9900, such as the operations associated with display, telephone calls, data communications, camera operations, and recording operations. The processing component 9902 may include one or more processors 9920 to execute instructions to perform all or part of the blocks in the above-described method for establishing a network connection. Moreover, the processing component 9902 may include one or more modules which may facilitate the interaction between the processing component 9902 and other components. For instance, the processing component 9902 may include a multimedia module to facilitate the interaction between the multimedia component 9908 and the processing component 9902.

The memory 9904 may be configured to store various types of data to support the operation of the apparatus 9900. Examples of such data may include instructions for any applications or methods operated on the apparatus 9900, contact data, phonebook data, messages, pictures, video, etc. The memory 9904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 9906 may provide power to various components of the apparatus 9900. The power component 9906 may include a power management system, one or more power sources, and any other components associated with the generation, management, and distribution of power in the apparatus 9900.

The multimedia component 9908 may include a screen providing an output interface between the apparatus 9900 and the user. In some examples, the screen may include a liquid crystal display (LCD) and/or a touch panel (TP). If the screen includes a touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some examples, the multimedia component 9908 may include a front camera and/or a rear camera. The front camera and/or the rear camera may receive external multimedia data while the apparatus 9900 is in an operation mode, such as a shooting mode or a video mode. Each of the front camera and the rear camera may be a fixed optical lens system or have focus and optical zoom capability.

The audio component 9910 may be configured to output and/or input audio signals. For example, the audio component 9910 includes a microphone (MIC); when the apparatus 9900 is in an operation mode such as call mode, record mode and speech recognition mode, the microphone is configured to receive external audio signal. The received audio signal may be further stored in the memory 9904 or transmitted via the communication component 9916. In some examples, the audio component 9910 may further include a loudspeaker to output audio signals.

The I/O interface 9912 may provide an interface between the processing component 9902 and peripheral interface modules, such as a keyboard, a click wheel, buttons, and the like. The buttons may include, but are not limited to, a home button, a volume button, a start button, and a lock button.

The sensor component 9914 may include one or more sensors to provide status assessments of various aspects of the apparatus 9900. For instance, the sensor component 9914 may detect an open/closed status of the apparatus 9900, relative positioning of components, e.g., the display and the keypad of the apparatus 9900, a change in position of the apparatus 9900 or a component of the apparatus 9900, a presence or absence of user contact with the apparatus 9900, an orientation or an acceleration/deceleration of the apparatus 9900, and a change in temperature of the apparatus 9900. The sensor component 9914 may include a proximity sensor configured to detect the presence of nearby objects without any physical contact. The sensor component 9914 may also include a light sensor, such as a CMOS or CCD image sensor, for use in imaging applications. In some examples, the sensor module 9914 may also include an accelerometer sensor, a gyroscope sensor, a magnetic sensor, a pressure sensor, a microwave sensor, or a temperature sensor.

The communication component 9916 may be configured to facilitate communication, wired or wirelessly, between the apparatus 9900 and other devices. The apparatus 9900 may access a wireless network based on a communication standard, such as WiFi, 2G or 3G, or a combination thereof. In one exemplary example, the communication component 9916 may receive a broadcast signal or broadcast associated information from an external broadcast management system via a broadcast channel. In an exemplary example, the communication component 9916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary examples, the apparatus 9900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method for establishing a network connection.

In exemplary examples, there is also provided a non-transitory computer-readable storage medium storing instructions therein, such as the memory 9904 storing instructions therein, the instructions executable by the processor 9920 in the apparatus 9900, for performing the above-described method for establishing a network connection. For example, the non-transitory computer-readable storage medium may be a ROM, a RAM, a CD-ROM, a magnetic tape, a floppy disc, an optical data storage device, and the like.

The technical solutions provided by the examples of the present disclosure may include the following beneficial effects. In an example method for establishing a network connection, the first AP whose connection authority is open to a target terminal may be searched for, and in response to finding the first AP, the target terminal may be controlled to establish a connection with the first AP. Subsequently, the authentication information used for establishing a connection with the second AP may be acquired via the first AP, and the target terminal may be controlled to establish a connection with the second AP based on the authentication information. In this way, after the authentication information used for establishing a connection with the second AP is modified, it may be unnecessary for a user of the terminal device to reenter new authentication information. Therefore, time for the terminal device to get connected with a network may be saved, and thus use efficiency of the AP may be improved.

According to the examples of the present disclosure, the first AP whose connection authority is open to a target terminal device is searched for, and in response to finding the first AP, the target terminal device may be controlled to establish a connection with the first AP. Subsequently, it is determined via the first AP that a connection has been established between the target terminal and the second AP before, the authentication information used for establishing a connection with the second AP may be acquired from prestored data, and the target terminal may be controlled to establish a connection with the second AP based on the authentication information. In this way, after the authentication information used for establishing a connection with the second AP is modified, it may be unnecessary for a user of the terminal device to reenter new authentication information. Therefore, time for the terminal device to get connected with the network may be further saved, and thus the use efficiency of the AP may be further improved.

Other examples of the invention will be apparent to those skilled in the art from consideration of the specification and practice of the invention disclosed here. This application is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It is to be appreciated that the present disclosure is not limited to the exact construction that has been described above and illustrated in the accompanying drawings, and that various modifications and changes can be made without departing from the scope thereof. The scope of the present disclosure is only restricted by the appended claims.

## Claims

1. A method for establishing a network connection, **characterized in that** the method comprises:
establishing a first access point (AP) and a second AP on a router, wherein the first AP is an open authorization AP and the second AP is an authenticated authorization AP;
searching for the first AP in case that a predetermined condition is satisfied;
in response to finding the first AP, controlling a target terminal device to establish a connection with the first AP;
acquiring authentication information used for establishing a connection with the second AP via the first AP when determining that a connection was established between the second AP and the target terminal previously; and
controlling the target terminal device to establish a connection with the second AP based on the authentication information.

2. The method according to claim 1, **characterized in that** the predetermined condition comprises at least one of:
the authentication information for establishing a connection with the second AP being modified; and
the target terminal being unsuccessful in establishing a connection with the second AP.

3. The method according to claim 2, **characterized in that** searching for the first AP comprises:
acquiring a connection state between the target terminal device and the second AP when the authentication information for establishing a connection with the second AP is modified;
disconnecting the target terminal from the second AP when the connection state indicates that a connection has been established between the target terminal and the second AP; and
searching for the first AP.

4. The method according to claim 1, **characterized in that** acquiring authentication information used for establishing a connection with the second AP via the first AP comprises:
determining via the first AP that a connection has been established between the target terminal and the second AP before to determine that the target terminal device has an authority for connecting with the second AP; and
acquiring, from prestored data, the authentication information used for establishing a connection with the second AP.

5. The method according to claim 4, **characterized in that** determining that a connection was established between the target terminal and the second AP previously comprises:
acquiring a prestored correspondence database, wherein the correspondence database is configured to record association relationships between any authenticated authorization AP established on the router and one or more terminal devices having an authority for connecting with the respective authenticated authorization AP;
searching for terminal devices associated with the second AP from the correspondence database; and
determining that a connection has been established between the target terminal device and the second AP before when the terminal devices associated with the second AP comprise the target terminal device.

6. The method according to claim 5, **characterized in that** the method further comprises:
acquiring, for any authenticated authorization AP established on the router, a first identifier of a AP and a second identifier of a terminal device having an authority for connecting with the AP respectively; and
storing the first identifier and the second identifier in the correspondence database in an associated way.

7. An apparatus for establishing a network connection, **characterized in that** the apparatus comprises:
a processor; and
a memory, storing executable instructions corresponding to control logic for establishing a network connection and executable by the processor;
the executable instructions being executed by the processor and causing the processor to:
search for a first AP in case that a predetermined condition is satisfied, wherein the first AP is an open authorization AP established on a router;
in response to finding the first AP, control a target terminal device to establish a connection with the first AP;
acquire authentication information used for establishing a connection with a second AP via the first AP when determining that a connection was established between the second AP and the target terminal previously, wherein the second AP is an authenticated authorization AP established on the router; and
control the target terminal device to establish a connection with the second AP based on the authentication information.

8. The apparatus according to claim 7, **characterized in that** the predetermined condition comprises at least one of:
the authentication information for establishing a connection with the second AP being modified; and
the target terminal being unsuccessful in establishing a connection with the second AP.

9. The apparatus according to claim 8, **characterized in that** when searching for the first AP, the executable instructions cause the processor to:
acquire a connection state between the target terminal device and the second AP when the authentication information for establishing a connection with the second AP is modified;
disconnect the target terminal from the second AP when the connection state indicates that a connection has been established between the target terminal and the second AP; and
search for the first AP.

10. The apparatus according to claim 7, **characterized in that** when acquiring the authentication information used for establishing a connection with the second AP via the first AP, the executable instructions cause the processor to:
determine via the first AP that a connection has been established between the target terminal and the second AP before to determine that the target terminal deice has an authority for connecting with the second AP; and
acquire, from prestored data, the authentication information used for establishing a connection with the second AP.

11. The apparatus according to claim 10, **characterized in that** when determining that a connection was established between the target terminal and the second AP previously, the executable instructions cause the processor to:
acquire a prestored correspondence database, wherein the correspondence database is configured to record association relationships between any authenticated authorization AP established on the router and one or more terminal devices having an authority for connecting with the respective authenticated authorization AP;
search for terminal devices associated with the second AP from the correspondence database; and
determine that a connection has been established between the target terminal device and the second AP before when the terminal devices associated with the second AP comprise the target terminal device.

12. The apparatus according to claim 11, **characterized in that** the executable instructions further cause the processor to:
acquire, for any authenticated authorization AP established on the router, a first identifier of a AP and a second identifier of a terminal device having an authority for connecting with the AP respectively; and
store the first identifier and the second identifier in the correspondence database in an associated way.

13. A non-transitory storage medium, storing executable instructions executed by one or more processors; **characterized in that** the executable instructions are executed by the one or more processors and cause the one or more processors to:
search for a first AP in case that a predetermined condition is satisfied, wherein the first AP is an open authorization AP established on a router;
in response to finding the first AP, control a target terminal device to establish a connection with the first AP;
acquire authentication information used for establishing a connection with a second AP via the first AP when determining that a connection was established between the second AP and the target terminal previously, wherein the second AP is an authenticated authorization AP established on the router; and
control the target terminal device to establish a connection with the second AP based on the authentication information.
